# FASCICULE DE BREVET EUROPEEN

(11) **EP 0 570 293 B1**
(45) Date de publication et mention de la délivrance du brevet: **30.08.1995**
(21) Numéro de dépôt: 93401231.1
(22) Date de dépôt: 13.05.1993
(51) Int. Cl.: H04L 12/28, H04L 12/46, H04B 3/54

(54) **Système de transmission de données dans une installation, notamment une installation domestique**
Datenübertragungssystem in einer Anlage, insbesondere einer Hausanlage
System for data-transmission in an installation, in particular a domestic installation

(30) Priorité: 15.05.1992 FR 9205943
(43) Date de publication de la demande: 18.11.1993
(73) Titulaire: SGS-THOMSON MICROELECTRONICS S.A., 94250 Gentilly (FR)
(72) Inventeur: Le Van Suu, Maurice, F-75116 Paris (FR)
(74) Mandataire: Schmit, Christian Norbert Marie

(56) Documents cités:
- WO-A-90/06027
- FR-A- 2 553 950
- GB-A- 2 171 880
- US-A- 4 638 298
- ELECTRONIQUE RADIO PLANS no. 521, Avril 1991, PARIS FR pages 61 - 67 B. DELABREET AL. 'Le D2 bus'
- PATENT ABSTRACTS OF JAPAN vol. 9, no. 181 (E-331)(1904) 26 Juillet 1985 &JP-A-60 52 144

## Description

La présente invention concerne un système de transmission de données dans une installation comprenant une pluralité d'organes répartis sur un support de transmission d'information.

L'invention trouve une application particulièrement avantageuse, mais non exclusive, dans le domaine de la gestion informatique d'installations domestiques, connu également sous le nom de domotique.

Dans le cadre de la domotique, les organes d'une installation comprennent en général une ou plusieurs stations de contrôle destinées à recevoir des instructions relatives au fonctionnement d'autres organes comme les divers appareils de l'installation : téléviseur, réfrigérateur, machine à laver, radiateur, etc... Ces instructions peuvent être, par exemple, des ordres d'arrêt ou de marche provenant d'un utilisateur ou des appareils eux-mêmes. A leur tour, la ou les stations de contrôle adressent auxdits appareils des ordres de commande sous la forme d'un message permettant notamment d'obtenir les modifications de fonctionnement désirées. Pour adresser ces ordres de commande, on utilise de façon usuelle des supports de transmission d'information de type varié, comme le courant porteur, les câbles coaxiaux, les paires torsadées, le rayonnement infra-rouge et les radio-fréquences par voie hertzienne, de même que les fibres optiques, les ultrasons, etc... Bien que d'application très générale, l'invention concerne plus spécialement le courant porteur, support de choix pour les installations domestiques.

L'installation envisagée ici peut être du type à intelligence localisée avec une station de contrôle recevant des messages d'appareils jouant le rôle de stations esclaves, et en émettant vers d'autres. Dans une installation à intelligence répartie, chaque organe peut jouer par autoprogrammation le rôle de martre ou d'esclave sans passer par la station de contrôle qui ne fait qu'écouter les messages.

Les appareils destinés à être intégrés dans une installation de domotique sont généralement prévus par les constructeurs pour travailler dans une configuration de réception donnée définie par une vitesse de transmission de message de commande qui dépend du type de l'appareil concerné. C'est ainsi que les appareils de chauffage peuvent fonctionner avec une vitesse relativement lente de 300 bauds, cette vitesse étant cependant nettement insuffisante pour les appareils d'éclairage qui exigent une vitesse de transmission sensiblement plus grande d'au moins 2400 bauds.

De manière à permettre à ces divers appareils de coexister sur un même support de transmission d'information, un mouvement d'harmonisation s'est amorcé en 1991 visant à imposer une vitesse unique de transmission de 1200 bauds.

Cependant, il est prévu que, dans un avenir relativement proche, des organes, stations de contrôle ou appareils, fonctionnant à une vitesse de transmission d'information supérieure, 2400 bauds par exemple, devront être raccordés sur des installations répondant au standard actuel.

Un système de transmission de données selon le préambule de la revendication 1 est par exemple connu du document ELECTRONIQUE RADIO PLANS, no. 521, Avril 1991, pages 61 à 67, B. Delabre et al.

Aussi, le but de la présente invention est de proposer un système de transmission de données dans une installation comprenant une pluralité d'organes répartis sur un support de transmission d'information, chaque organe étant apte à recevoir et émettre des données à l'une d'au moins deux vitesses de transmission, système qui permettrait, d'une part, de faire communiquer entre eux des organes d'une même installation mais dont les vitesses de transmission seraient différentes, et, d'autre part, d'harmoniser l'existant et le futur en intégrant le standard européen actuel.

Conformément à l'invention, ce but est atteint du fait que ledit système de transmission de données comprend également au moins un organe dit organe relayeur de manière à assurer la transmission de données, sur le support de transmission d'information, entre les organes fonctionnant à l'une des vitesses de transmission et les organes fonctionnant à une autre des vitesses de transmission, cet organe relayeur étant muni pour cela de moyens de réception et d'émission de données à chacune desdites vitesses de transmission, les moyens de réception comprenant des moyens de reconnaissance de la vitesse de transmission des données reçues par ledit organe relayeur, ces moyens de reconnaissance comprenant des moyens d'estimation de ladite vitesse de transmission à partir du nombre de fronts détectés pendant un temps donné dans un préambule dudit message numérisé.

Ainsi, comme on le verra en détail plus loin, ledit organe relayeur est capable, d'une part, de communiquer avec les organes fonctionnant à la vitesse de transmission nominale de l'installation, et, d'autre part, de servir de relais, aussi bien en réception qu'en émission, pour les autres organes fonctionnant à une autre vitesse de transmission.

La description qui va suivre en regard des dessins annexés, donnés à titre d'exemples non limitatifs, fera bien comprendre en quoi consiste l'invention et comment elle peut être réalisée.

La figure 1 est un schéma représentant une installation comprenant un système de transmission de données conforme à l'invention, entre une station de contrôle et plusieurs appareils répartis sur une ligne de courant porteur.

La figure 2 est un schéma de la station de contrôle de la figure 1.

La figure 3 est un schéma de l'appareil relayeur de la figure 1.

La figure 4 donne la composition typique d'un message transmis entre les différents organes de l'installation de la figure 1.

La figure 5 donne un exemple de préambule du message de la figure 4 : a) pour une vitesse de transmission de 1200 bauds, b) pour une vitesse de transmission de 2400 bauds.

La figure 6 est un schéma de moyens de reconnaissance de vitesse de l'appareil relayeur de la figure 1.

La figure 7 est une variante à deux stations de contrôle de l'installation de la figure 1.

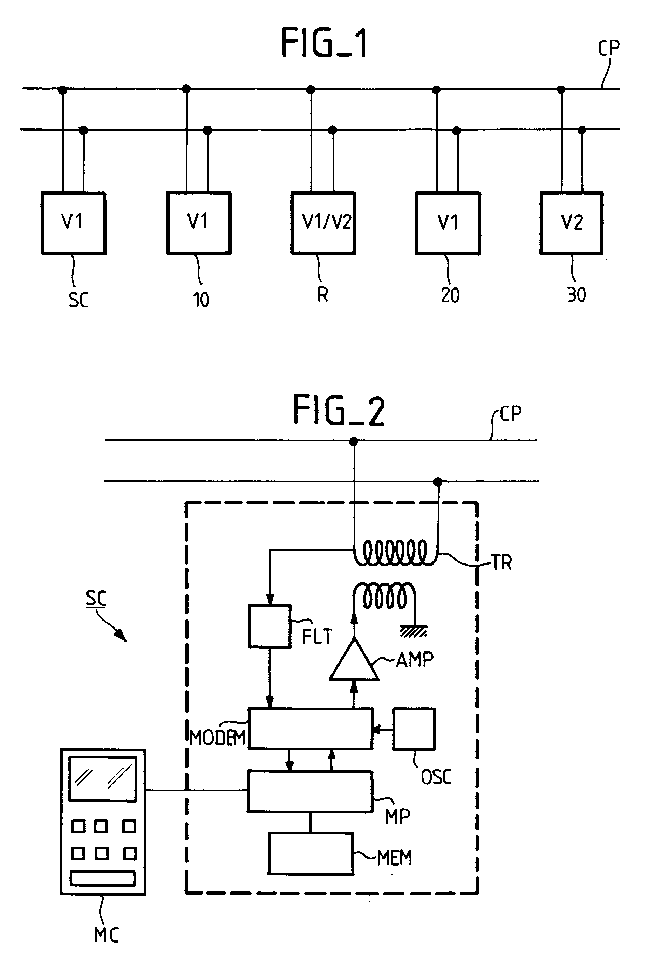

La figure 1 montre de manière schématique un système de transmission de données dans une installation domestique comprenant une pluralité d'organes SC, 10, 20, 30 répartis sur un support de transmission d'information, ici le courant porteur CP. La transmission des données entre les différents organes de l'installation se fait donc uniquement à travers le réseau de distribution d'énergie et non pas à travers une ligne de transmission réservée à la circulation d'informations. Cependant, si une telle ligne existait, elle pourrait tout aussi bien être utilisée à cette fin.

Les organes constitués par la station de contrôle SC et les appareils 10, 20 sont aptes à recevoir et émettre des données à une vitesse V1 de transmission de 1200 bauds par exemple, tandis que l'appareil 30 ne peut recevoir et émettre des données qu'à une autre vitesse V2 de transmission de 2400 bauds par exemple. Cette situation est susceptible de se produire lorsqu'à une installation d'une première génération fonctionnant à la vitesse V1 on ajoute un organe de deuxième génération, tel que l'appareil 30, fonctionnant à la vitesse V2 généralement plus rapide que V1. Il est bien entendu que dans ces conditions aucune communication entre les organes SC, 10, 20, d'une part, et l'appareil 30, d'autre part, n'est possible.

Pour remédier à cette situation, il est prévu, conformément à la figure 1, que ledit système de transmission de données comprend également au moins un organe, dit organe relayeur noté ici R, muni de moyens de réception et d'émission de données à chacune des vitesses V1, V2 de transmission, de manière à assurer la transmission de données entre les organes fonctionnant à des vitesses de transmission différentes.

Les données sont transmises sur le réseau du courant porteur CP par une double modulation de fréquence d'une fréquence porteuse donnée, les informations binaires 0 et 1 étant représentées par exemple par la présence respective d'une première fréquence de modulation de 132 kHz et d'une deuxième fréquence de modulation de 133 kHz.

La constitution générale de la station de contrôle SC est donnée sur la figure 2. La station comprend de préférence un circuit à microprocesseur pour émettre des signaux de commande et pour recevoir et traiter les signaux reçus. Ce circuit comporte ses propres programmes de fonctionnement, qui sont contrôlés par l'utilisateur par exemple par l'intermédiaire d'une console MC comprenant un clavier de commande et un écran de contrôle. On peut aussi prévoir que le circuit à microprocesseur est contrôlé par un microordinateur personnel, l'utilisateur pouvant alors définir à volonté des programmes de fonctionnement du microprocesseur.

Outre un microprocesseur MP, ses mémoires de programme et de travail MEM, le circuit comporte les moyens nécessaires pour établir les signaux à transmettre sur le courant porteur CP. Ces moyens comportent de préférence un oscillateur OSC pour établir une fréquence porteuse. La sortie de l'oscillateur est appliquée, à travers un modulateur/démodulateur MODEM, à un amplificateur AMP, et la sortie de l'amplificateur AMP est appliquée au primaire d'un transformateur TR dont le secondaire est connecté au réseau de distribution électrique du courant porteur CP.

Les informations qui viennent du courant porteur CP et qui sont destinées à la station de contrôle SC arrivent par le transformateur TR. Elles sont transmises à une cellule de filtrage FLT permettant de détecter la présence d'une modulation sur le réseau. La sortie de la cellule de filtrage est reliée au MODEM et mise en forme. La sortie de ce circuit est reliée au microprocesseur MP. Les signaux reçus du réseau des autres appareils de l'installation sont démodulés et transformés en successions d'impulsions binaires qui sont exploitables par le microprocesseur MP.

Par ailleurs, un circuit processeur de données est associé à chaque appareil connecté au réseau de distribution d'énergie par courant porteur.

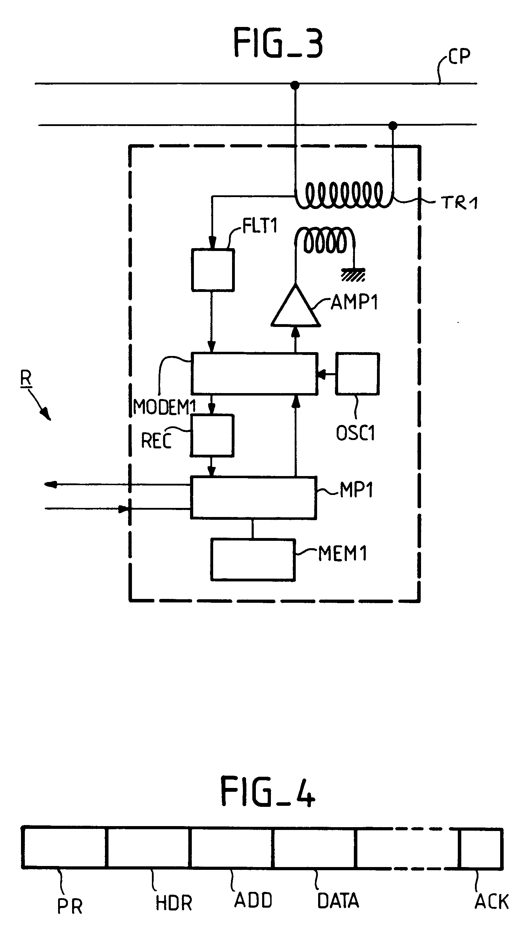

Sur la figure 3 on a représenté la constitution générale du circuit processeur associé à l'appareil relayeur noté R.

Ce circuit R est pratiquement constitué comme le circuit de la figure 2, mais il n'est pas contrôlé par un clavier et un écran. Il comprend un microprocesseur MP1 avec une mémoire de programmes MEM1 permettant audit microprocesseur d'exécuter des opérations prédéterminées sous la commande des signaux reçus du réseau. Il comprend également un transformateur TR1 par lequel peuvent être transférés vers le réseau ou reçus du réseau des signaux de modulation de la fréquence porteuse. Il comprend également les moyens de modulation, filtrage et démodulation nécessaires pour la conversion de ces signaux dans une forme utilisable par le microprocesseur : OSC1, MODEM1, AMP1, FLT1, exactement comme dans le circuit de la station de contrôle SC.

Enfin, le microprocesseur MP1 est relié à l'appareil auquel il est associé. Cette liaison permet d'une part de transmettre des ordres à l'appareil, et d'autre part éventuellement de recueillir des informations en provenance dudit appareil, y compris par exemple des données sur son état de fonctionnement. Le détail de cette liaison dépend bien entendu du type d'appareil à commander, des ordres qu'on peut lui donner, des informations qu'on souhaite recueillir.

Lors de la réception d'ordres en provenance du réseau, le microprocesseur MP1 pourra exécuter des programmes stockés dans sa mémoire de programmes.

En plus de cette structure commune à tous les circuits processeurs des appareils connectés au réseau du courant porteur CP, l'appareil relayeur R présente la particularité de comporter des moyens REC de reconnaissance de la vitesse de transmission des données reçues des autres organes de l'installation, notamment de la station de contrôle SC. Cette reconnaissance permet ensuite d'indiquer au microprocesseur MP1 la fréquence d'échantillonnage à laquelle il devra fonctionner.

Le fonctionnement général de l'installation de la figure 1 est alors le suivant.

Au cours de la phase d'initialisation de l'installation, l'appareil relayeur R émet à la vitesse de transmission V1 un premier message de prise en charge visant à rechercher sur le réseau un organe susceptible de gérer le fonctionnement de l'appareil R, à savoir mise en marche/arrêt, mesure de la consommation, tarification, sécurité, etc...

Ce message présente la structure générale représentée sur la figure 4, avec notamment un préambule PR, un en-tête HDR, une zone ADD d'adresses comportant l'adresse de l'émetteur de message et celles des destinataires, une zone DATA de données, et éventuellement une zone ACK d'acquittement dans laquelle l'émetteur du message indique s'il désire ou non recevoir un message d'acquittement en réponse au message émis. Le plus souvent, la station de contrôle SC sera le seul organe intéressé par la présence de l'appareil R sur le réseau du courant porteur CP. La station de contrôle SC stockera en mémoire l'adresse de l'appareil relayeur R ainsi que ses deux vitesses V1, V2 de transmission, et enverra, à la vitesse V1, à destination de l'appareil R un message de réponse l'informant de sa prise en charge par la station de contrôle SC.

L'appareil R émettra ensuite à la vitesse de transmission V2 un deuxième message de prise en charge qui dans ce cas restera sans réponse.

Au cours de la même phase d'initialisation, l'appareil 30 émettra à la vitesse de transmission V2 un message de prise en charge qui ne sera reçu que par l'appareil relayeur R. Celui-ci étant sous la dépendance de la station de contrôle SC, transmettra à ladite station de contrôle à la vitesse de transmission V1 le message qu'il aura reçu de l'appareil 30 à la vitesse V2. De la même manière, la station de contrôle SC stockera en mémoire l'adresse de l'appareil 30, sa vitesse V2 de transmission, ainsi que le fait que l'appareil R sert de relais pour l'appareil 30.

En fonctionnement de l'installation, il peut se produire que la station de contrôle SC ait besoin de connaître des informations provenant de l'appareil 30: si cet appareil est une sonde de température, par exemple, la station de contrôle SC devra connaître l'information température avant d'arrêter ou de mettre en marche un appareil de chauffage. La station de contrôle ayant en mémoire que l'appareil 30 fonctionne à la vitesse V2 et qu'il ne peut donc être interrogé directement, émettra à la vitesse de transmission V1 le message d'interrogation à l'adresse de l'appareil relayeur R qui répétera ledit message d'interrogation à la vitesse V2 à l'adresse de l'appareil 30. L'appareil 30 interrogé émettra l'information demandée vers la station de contrôle SC via l'appareil relayeur R.

Dans une variante de fonctionnement, l'appareil 30 peut émettre périodiquement à la vitesse V2 l'information température celle-ci étant répétée à la vitesse V1 en direction de la station de contrôle SC. L'avantage de ce mode de fonctionnement réside dans le fait qu'il n'est pas besoin à la station de contrôle d'interroger l'appareil 30 via l'appareil relayeur R.

La description qui précède met en oeuvre un appareil relayeur R apte à émettre une information dédiée à un organe donné de l'installation, par exemple l'information température vers la station de contrôle SC. Si un autre appareil est concerné par la même information, comme un radiateur en ce qui concerne la température, la station de contrôle SC devra, durant la phase d'initialisation, informer l'appareil relayeur R de manière à le rendre apte à émettre l'information de manière généralisée à l'ensemble des organes de l'installation concernée par cette information. En mode de fonctionnement dédié, le message émis par l'appareil relayeur R comporte l'adresse de l'organe auquel il est destiné. En mode de fonctionnement généralisé, le message peut comporter une adresse globale pour tous les organes concernés ou pas d'adresse du tout.

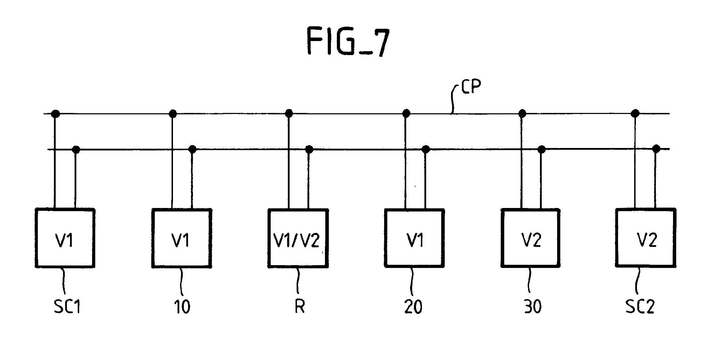

Comme l'indique la figure 7, deux stations de contrôle peuvent être connectées au réseau de courant porteur de l'installation, l'une, SC1, fonctionnant à la vitesse V1 de transmission et l'autre, SC2, fonctionnant à la vitesse V2.

A l'initialisation de l'installation, les appareils fonctionnant à la vitesse V2 de transmission, à savoir les appareils R et 30, sont pris en charge par la station de contrôle SC2 avec laquelle ils peuvent échanger des informations.

En outre, l'appareil relayeur R informe la deuxième station de contrôle SC2 de la présence dans l'installation de la première station de contrôle SC1 et des appareils 10, 20 dont cette dernière assure la prise en charge.

L'utilisateur a alors le choix entre deux possibilités :
- la station de contrôle SC1 continue de gérer les appareils 10, 20, la station de contrôle SC2 gérant les appareils R et 30. Si la seconde station SC2 a besoin de communiquer avec les appareils 10, 20, elle utilisera l'appareil relayeur R, de même pour la première station SC1 si elle doit communiquer avec l'appareil 30 ;
- la station de contrôle SC2 assure la gestion de tous les appareils, directement pour les appareils R et 30, et indirectement par l'intermédiaire de l'appareil relayeur R pour les appareil 10, 20.

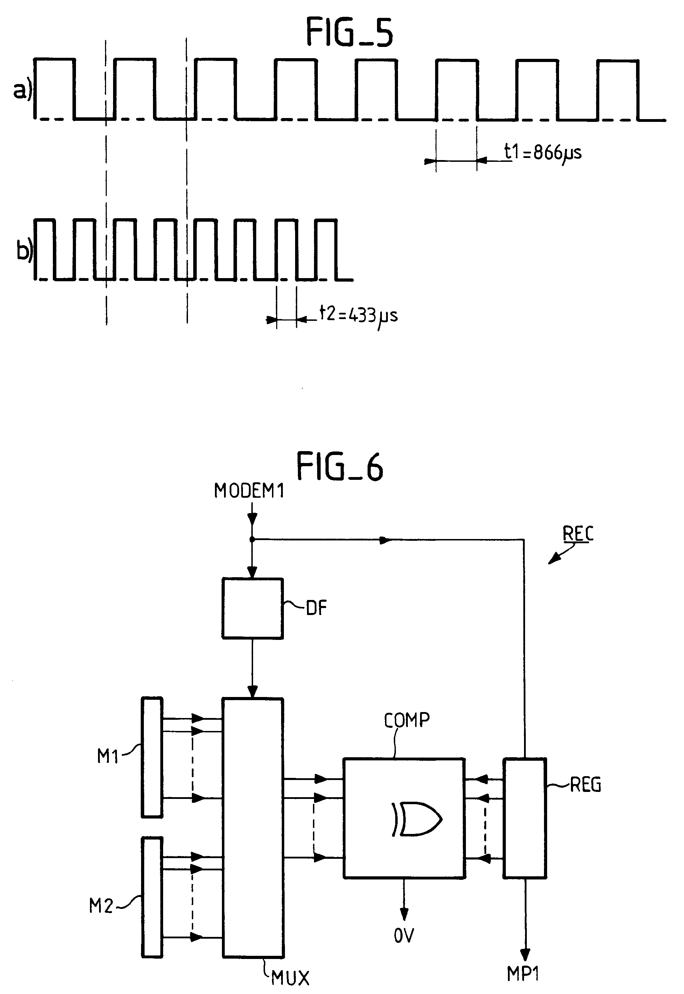

Les moyens de reconnaissance de la vitesse de transmission des données reçues par l'appareil relayeur R vont maintenant être décrits en détail en regard des figures 5 et 6.

Les moyens REC de reconnaissance de la vitesse de transmission comprennent tout d'abord des moyens d'estimation de ladite vitesse à partir du nombre de fronts présents pendant un temps donné dans le préambule PR du message numérisé de la figure 4, après démodulation de fréquence par le MODEM1.

Nous prendrons l'exemple où le préambule PR est donné par le motif AAAA en hexadécimal, c'est à dire 16 bits alternativement 1 et 0, comme on peut le voir sur la figure 5. En a) est montré le préambule pour une vitesse V1 de 1200 bauds, la durée d'un bit étant t1 = 866 »s, tandis qu'en b) la vitesse de transmission V2 est de 2400 bauds avec une durée t2 de bit de 433 »s.

Il est clair que pour un même temps donné de 1,733 ms par exemple défini par les deux traits pointillés, on pourra détecter un front montant et un front descendant lorsque la vitesse de transmission est de 1200 bauds, contre 2 fronts montants et 2 fronts descendants pour une vitesse de 2400 bauds. 11 suffit alors, comme le montre la figure 6, de placer en sortie du démodulateur du MODEM1 de l'appareil relayeur R un détecteur DF de fronts pour avoir une estimation de la vitesse de transmission des données reçues.

Afin d'éviter une erreur dans l'estimation de la vitesse de transmission due à la détection de fronts parasites, il est prévu, à titre de redondance, des moyens de confirmation de la vitesse estimée.

Dans son principe, cette confirmation est réalisée en comparant l'en-tête HDR du message reçu, consécutif au préambule PR, avec un motif M1 ou M2 mémorisé dans lesdits moyens de confirmation, caractéristique de la vitesse estimée par les moyens d'estimation. Les motifs M1 et M2 sont des mots de 16 bits, par exemple, représentatifs respectivement de la vitesse de transmission V1 et de la vitesse de transmission V2.

De façon pratique, le circuit schématisé sur la figure 6 fonctionne de la façon suivante. Le circuit DF d'estimation, après avoir par exemple détecté un message à la vitesse estimée de V1, fait basculer un multiplexeur 16 bits MUX sur le motif M1 qui est alors appliqué à une première entrée d'un comparateur numérique 16 bits COMP. Le message numérisé provenant du MODEM1 est appliqué à un registre 16 bits REG lui-même relié à une deuxième entrée du comparateur COMP. La comparaison est effectuée lorsque les 16 bits de l'en-tête HDR sont présents dans le registre REG. Le comparateur COMP délivre alors un ordre de validation OV dont la valeur dépend du résultat de la comparaison. Si le contenu de l'en-tête HDR est identique au motif sélectionné par les moyens d'estimation, ici le motif M1, la vitesse estimée est confirmée et l'ordre de validation OV vaut 1, le message étant ensuite transmis dans son intégralité au microprocesseur MP1. Dans le cas où la comparaison est négative, l'ordre de validation OV vaut 0 et la transmission du message vers le microprocesseur MP1 est interrompue jusqu'à la séquence suivante.

Bien entendu, l'invention qui vient d'être décrite pour seulement deux vitesses de transmission de 1200 et 2400 bauds pourrait être également mise en oeuvre pour plus de deux vitesses choisies égales à 300, 600, 900, 1200, 2400 bauds etc...

## Revendications

1. Système de transmission de données dans une installation comprenant une pluralité d'organes (SC, 10, 20, 30; SC1, SC2, 10, 20, 30) répartis sur un support (CP) de transmission d'information unique, chaque organe étant apte à recevoir et émettre des données, sous forme d'un message numérisé par modulation de fréquence, à l'une d'au moins deux vitesses (V1, V2) de transmission, caractérisé en ce qu'il comprend également au moins un organe (R) dit organe relayeur de manière à assurer la transmission de données, sur le support de transmission d'information, entre les organes fonctionnant à l'une des vitesses de transmission et les organes fonctionnant à une autre des vitesses de transmission, cet organe relayeur étant muni pour cela de moyens de réception et d'émission de données à chacune desdites vitesses de transmission (V1, V2), les moyens de réception comprenant des moyens (REC) de reconnaissance de la vitesse de transmission des données reçues par ledit organe relayeur, ces moyens de reconnaissance comprenant des moyens (DF) d'estimation de ladite vitesse de transmission à partir du nombre de fronts détectés pendant un temps donné dans un préambule (PR) dudit message numérisé.

2. Système selon la revendication 1, caractérisé en ce que les moyens (REC) de reconnaissance de la vitesse de transmission comprennent également des moyens (MUX, COMP, REG) de confirmation de ladite vitesse de transmission par comparaison d'un en-tête (HDR) du message reçu, consécutif au préambule (PR), avec un motif (M1, M2) mémorisé dans lesdits moyens de confirmantion, caractéristique de la vitesse (V1, V2) estimée.

3. Système selon l'une des revendications 1 à 2, caractérisé en ce que ledit organe relayeur est apte à émettre une information dédiée à un organe donné de l'installation.

4. Système selon l'une des revendications 1 à 2, caractérisé en ce que ledit organe relayeur est apte à émettre une information généralisée à un ensemble d'organes de l'installation.

## Patentansprüche

1. System zur Datenübertragung in einer Anlage, das mehrere, auf einem einzigen Datenübertragungssupport (CP) verteilte Einrichtungen (SC, 10, 20, 30; SC1, SC2, 10, 20, 30) umfaßt, wobei jede Einrichtung geeignet ist, Daten in Form einer durch Frequenzmodulation digitalisierten Nachricht zu empfangen und auszusenden, und zwar mit mindestens einer von zwei Übertragungsgeschwindigkeiten (V1, V2), dadurch gekennzeichnet, daß es außerdem mindestens eine Einrichtung (R) umfaßt, die Weitergabeeinrichtung genannt wird, und die auf dem Datenübertragungssupport die Übertragung von Daten zwischen den Einrichtungen, die mit einer der Übertragungsgeschwindigkeiten arbeiten, und den Einrichtungen, die mit einer anderen der Übertragungsgeschwindigkeiten arbeiten, sicherstellen soll, wobei diese Weitergabeeinrichtung hierzu mit Datenempfangs- und -sendevorrichtungen mit jeder der Übertragungsgeschwindigkeiten (V1, V2) ausgerüstet ist und die Empfangsvorrichtungen (REC) Einrichtungen zum Erkennen der Übertragungsgeschwindigkeit der von dieser Weitergabeeinrichtung empfangenen Daten umfassen, wobei diese Erkennungsvorrichtungen Einrichtungen (DF) zum Schätzen dieser Übertragungsgeschwindigkeit auf der Grundlage der Anzahl entdeckter Fronten während einer in einer Einleitung (PR) der digitalisierten Nachricht gegebenen Zeit aufweisen.

2. System nach Anspruch 1, dadurch gekennzeichnet, daß die Einrichtungen (REC) zum Erkennen der Übertragungsgeschwindigkeit außerdem Vorrichtungen (MUX, COMP, REG) zur Bestätigung der Übertragungsgeschwindigkeit durch Vergleich einer der Einleitung (PR) folgenden Kopfzeile (HDR) der erhaltenen Nachricht mit einem in den genannten Bestätigungsvorrichtungen gespeicherten Motiv umfassen, das die geschätzte Geschwindigkeit (V1, V2) kennzeichnet.

3. System nach einem der Ansprüche 1 bis 2, dadurch gekennzeichnet, daß die Weitergabeeinrichtung geeignet ist, eine für eine gegebene Vorrichtung der Anlage bestimmte Information auszusenden.

4. System nach einem der Ansprüche 1 bis 2, dadurch gekennzeichnet, daß die Weitergabeeinrichtung geeignet ist, eine Allgemeininformation an eine Gruppe von Einrichtungen der Anlage zu senden.

## Claims

1. System for transmitting data in an installation comprising a plurality of units (SC, 10, 20, 30; SC1, SC2, 10, 20, 30) distributed on a single information transmission medium (CP), each unit being suitable for receiving and transmitting data, in the form of a message digitised by frequency modulation, at one of at least two transmission speeds (V1, V2),
characterised in that it also comprises at least one unit (R) referred to as a relay unit, so as to provide the transmission of data, over the information transmission medium, between the units functioning at one of the transmission speeds and the units functioning at another one of the transmission speeds, this relay unit being provided for that purpose with means for receiving and transmitting data at each of the said transmission speeds (V1, V2), the reception means comprising means (REC) for recognising the speed of transmission of the data received by the said relay unit, these recognition means comprising means (DF) for estimating the said transmission speed from the number of edges detected during a given time in a preamble (PR) of the said digitised message.

2. System according to Claim 1, characterised in that the means (REC) for recognising the transmission speed also comprise means (MUX, COMP, REG) for confirming the said transmission speed by comparing a header (HDR) of the message received, following the preamble (PR), with a pattern (M1, M2) stored in the said confirmation means, characteristic of the estimated speed (V1, V2).

3. System according to one of Claims 1 to 2, characterised in that the said relay unit is suitable for transmitting a dedicated item of information to a given unit of the installation.

4. System according to one of Claims 1 to 2, characterised in that the said relay unit is suitable for transmitting a universal item of information to a set of units of the installation.
